# EUROPEAN PATENT APPLICATION

(11) **EP 3 202 263 A1**
(43) Date of publication of application: **09.08.2017**
(21) Application number: 17154365.5
(22) Date of filing: 02.02.2017
(51) Int. Cl.: A01M 7/00, A01C 21/00

(54) **INTELLIGENT DOUBLE-SPRAY FERTILIZATION SYSTEM AND METHOD**

(30) Priority: 02.02.2016 PT 16109127
(71) Applicant: Tecniferti, S.A., 2416-903 Leiria (PT)
(72) Inventor: FERNANDES PEDRO SOARES, João Nuno, 1000-155 Lisboa (PT)
(74) Representative: Pereira da Cruz, Joao

(57) **Abstract**

The present invention concerns to a fertilization system that allows spraying a second product simultaneously with the first one, not requiring to repeat the process; with this purpose the system presents a mechanical support structure and a set of tanks (1, 2), taps and nozzles (4), which allow spraying of two products to be carried out simultaneously, although using different nozzles spaced a short distance from each other, in the order of centimeters. In addition to this double-spray, and in order to solve the lack of certain substances in specific land spots, the present invention allows the spraying being carried out in a heterogeneous way, through an intelligent system having as input georeferenced information of the land to be treated and by parameters entered by the user, i.e., in a certain area of the land it is possible to spray a certain amount of product, which may be different in another area.

## Description

### Technical field of the invention

The present invention concerns to an intelligent double-spray fertilizer system that allows two products being sprayed simultaneously on the land. In addition to the aforementioned function, it allows to maximize the fertilization according to the characteristics of the land on which the operation is desired to be carried out. The present invention is connected to the field of precision farming and its goal is the production factors rationalization, thus reducing production costs and therefore increasing productivity.

### State of the art of the invention

Currently the fertilization by spraying of lands is carried out by agricultural machines, in which the first spraying is carried out with a certain first product and, in case the land needs an additional product, it is necessary to repeat the operation a second time in the whole land, although using a second product; however, this task is time-consuming and has costs that are often detrimental to farmers, which means that the second operation is not frequently carried out, becoming the land poor in some substances which the product to be cultivated would require the land to have.

In addition to this disadvantage, it frequently happens that the land to be cultivated is not homogeneous regarding its needs, since not all the land surface has the same needs; sometimes in a field there are certain areas, called land spots, lacking some specific substances or simply with a deficit relative to the remaining area to be cultivated, which means that the machine operator has to make the distribution manually or otherwise it will be done in the same way throughout the land, thus implying that either the areas where a certain amount of product is not needed will have an excess or the need will remains.

The present invention solves the aforementioned problems, since it concerns a fertilization system allowing the spraying of a second product simultaneously with the first one, not requiring to repeat the process; with this purpose the system presents a mechanical support structure and a set of tanks, taps and nozzles, which allow spraying of two products to be carried out simultaneously, although using different nozzles spaced a short distance from each other, in the order of centimeters.

In addition to this double-spray, and in order to solve the lack of certain substances in specific land spots, the present invention allows spraying being carried out in a heterogeneous way, through an intelligent system having as input georeferenced information of the land to be treated and by parameters entered by the user, i.e., in a certain area of the land it is possible to spray a certain amount of product, which may be different in another area. One should note that the work parameters (working width, speed, nozzles and flow rate) are defined by the user, i.e., the user selects the flow rate (L/ha) which automatically depends on the speed, that is to say, the system itself adjusts the instantaneous flow rate to the speed in order to meet the flow rates entered by the user.

Thus, the present invention allows the application of fertilization with variable rate, according to crop needs and soil constraints, using at the same time a second product which potentiates the least productive land spots, with the following advantages as compared to the state of the art:
- better efficiency as a result of the accuracy of the applied doses;
- environmental protection as a result of the application of the quantities actually needed for the crop;
- taking the most advantages of the productive potential of each square meter cultivated;
- the intelligent fertilization with multi-product application allows several tasks to be performed in a single pass of the machine, with significant impact on reducing application costs.

### Brief Description of the Figures

Fig. 1 - Representation of the hydraulic circuit of the main and secondary products, of the fertilization system.
Fig. 2a - Representation of the electrical circuit of the main product of the fertilization system.
Fig. 2b - Representation of the electrical circuit of the secondary product of the fertilization system.
Fig. 3 - Representation of a preferred embodiment of the system according to the present invention, in which three main tanks (1), three secondary tanks (2) and two water tanks (3) are visible.
Fig. 4 - Representation of a preferred embodiment of the system according to the present invention, in which the bars (5) (6) of the mechanical support structure and respective nozzles (4) for products spraying are visible.

### Description of the invention

The present invention concerns to a fertilization system that allows spraying a second product simultaneously with the first one, without being necessary to repeat the process; with this purpose, the system has a mechanical support structure and a set of tanks (1) (2) (3), taps and nozzles (4), which allow two products (PD1) (PD2) being sprayed at the same time although using different nozzles (4), which are spaced a short distance-from each other, in the order of centimeters, between the larger bar (5) and the smaller bar (6) of the mechanical support structure. In addition to this double-spray, and in order to solve the lack of certain substances in specific land spots, the present invention allows spraying being carried out in a heterogeneous way, through an intelligent system having as input georeferenced information of the land to be treated and by parameters entered by the user, i.e., in a certain area of the land it is possible to spray a certain amount of product, which can be different in another area.

The present invention is a system consisting essentially of four parts: tanks (1) (2) (3), electrical and hydraulic schemes and mechanical support structure. It also has an integrated geographical positioning system (GPS) module or, alternatively, the one that is part of the agricultural machine itself in case it already has its own.

Regarding to the tanks part, it is important to mention that it consists of: at least a main tank (1) containing the first product (PD1), known as main product; at least a secondary tank (2) containing the second product (PD2); and at least one washing water tank (3).

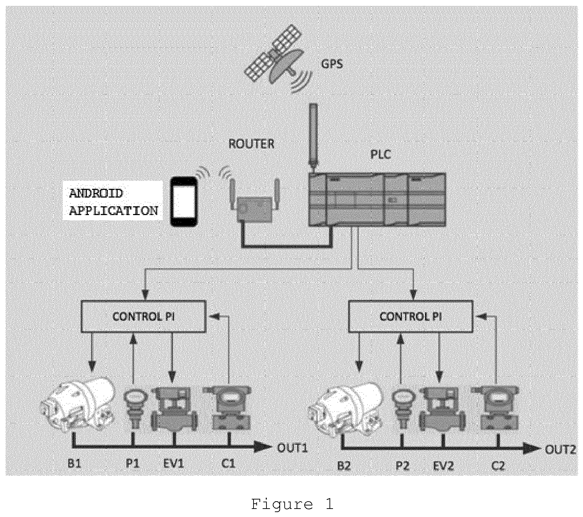

The hydraulic scheme is shown in Fig. 1, in which all the components and connections are outlined and presented, and wherein both the main product (PD1) scheme and the second product (PD2) scheme are similar, only differing by delivering products coming from different tanks. The wiring diagram shows the following operation method:
- through a mobile application, for example android, which must be installed in a mobile device, the working parameters used by the system to make the proportional control of the desired flow rates are set. These parameters concern to the working width and speed, flow rate (L/ha), number of products (PD1) (PD2) (two or one) in operation and the flow capacity of the nozzle that will spray it. It should be noted that the working parameters (working width, speed, nozzles and flow rates) are defined by the user, i.e., the user selects the flow rate (L/ha) which automatically depends on the speed, that is to say, the system itself adjusts the instantaneous flow rate to the speed in order to meet the flow rates entered by the user. It should be noted that, in this step, there are two alternatives: the first one, when the application has as input a prescription map, which, in fact, it is just the georeferenced information of the land to be fertilized including its characteristics; the second one, in which the machine operator can manually set the desired flow rate and activate/deactivate any of the circuits as desired. Also in this stage, it must be noted that the system starts as soon as it identifies a machine speed greater than 1 km/h, with this identification being carried out through the GPS module. In case the GPS module is unavailable, it is enough that the user sets the identification manually, using the speed as working parameter, in which case the speed will be constant throughout the fertilization process;
- next, the pumps (B1) (B2) need to be filled, that is, the system must draw water from the tanks (3) to the nozzles (4), and then a change of taps must occur in order to not waste any amount of product (PD1) (PD2), and thus the main and/or the secondary products (P1) (PD2) are pumped to the corresponding nozzles (4);
- as the speed of the machine changes, the fertilization system starts, depending on the speed of the machine in case this is identified by the GPS module, and the valve (EV1) (EV2) open and close according to the flowmeter (C1) (C2) indication, thus allowing the adjustment and stabilization of the flow rate previously set in the step when the working parameters were defined. Fertilization is also carried out according to the characteristics of the geographic information initially set.

It should be noted that all the control mentioned above is carried out by the Programmable Logic Controller (PLC), which receives the signals from the flowmeters (C1) (C2) and from the GPS module (or the speed in case GPS is unavailable) in order to control the opening of the valves (EV1) (EV2). The GPS module sends information to the PLC through an antenna installed outside the system.

The system is also monitored through pressure sensors (P1) (P2), installed in the hydraulic circuit, in order the system automatically stops when the pressure is too high.

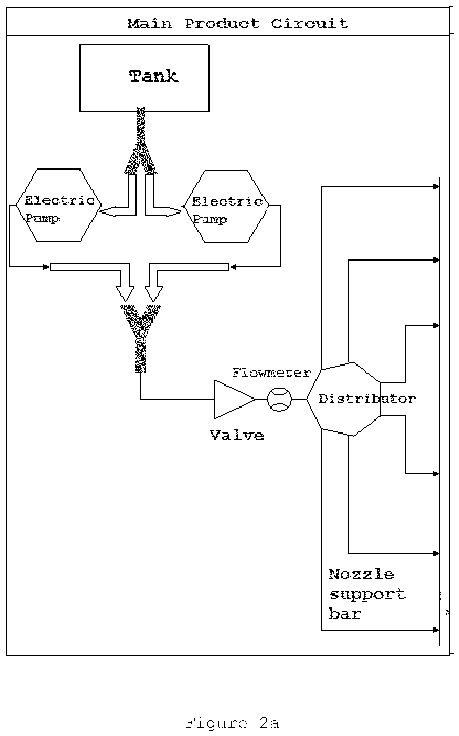

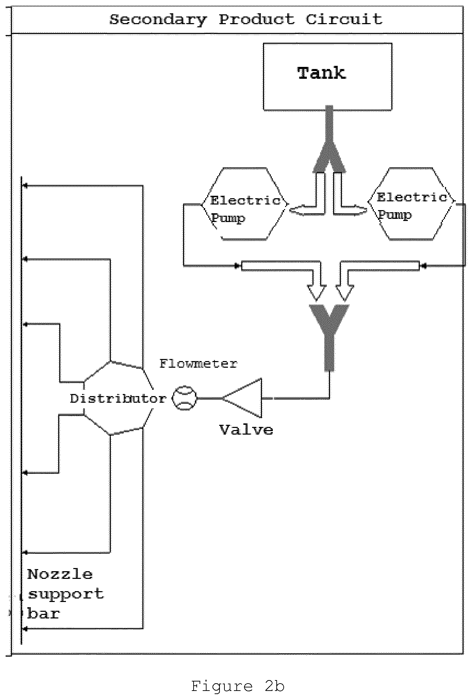

The electrical scheme is shown in Fig. 2 and it is characterized in that both the main product (PD1) (Fig. 2a) and second product (PD2) (Fig. 2b) circuits are identical, only differing by delivering products coming from different tanks. Initially, the products (PD1) (PD2) are pumped from the tanks by the pumps and piped through hoses to the valves (EV1) (EV2) and flowmeters (C1) (C2) in the direction of the distributor. After this step, the product is piped to application nozzles (4) from where it will flow to the soil.

It should be noted that, although not exemplified in the hydraulic scheme, there are a number of taps and filters allowing operating the system as above.

The last part of the system object of the present invention is the mechanical support structure of the system, which is a mechanical support structure consisting of two bars (5) (6) with nozzles (4) along their length and connecting means between the nozzles and the tanks (1) (2) (3). This structure further provides the possibility of changing the vertical distance at which the application bars (5) (6) are from the soil, through a mechanical jack operated by a crank.

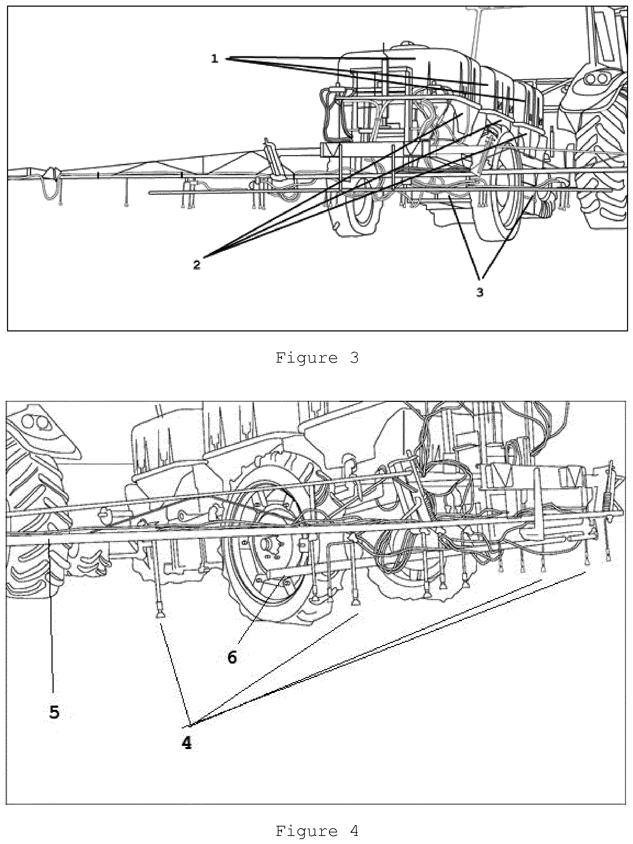

It can be further considered that the system may have only a larger bar (5) or (6) which can apply just one product. Through the tap scheme and changing the hoses in the distributor, it is possible to fill all the tanks with just one product which is then applied in a larger bar. Fig. 4 shows the application of two products (PD1) (PD2) with a smaller bar (6) together with a larger bar (5).

As described above, the present invention allows the machine to operate in several modes:
- the mobile application can receive a georeferenced file (prescription map) already having the desired flow rates for each circuit, i.e., depending on the geographic coordinate, the flow rate defined in the file (prescription map) is applied; or
- the mobile application can operate in a manual mode in which the machine operator can set the intended flow rate and activate/deactivate any of the circuits as desired.

One of the preferred embodiments is shown in Fig. 4, where three main tanks (1), three secondary tanks (2) and two washing water tanks (3) are present, this one being the towable embodiment, that is, the one that is applied to any machine which is intended to be adapted for this fertilization operation. Other preferred embodiments are possible, in which the mechanical support structure is different and the number of tanks, pumps, circuits, flowmeters and valves changes, allowing different autonomies. Thus, the towable embodiment will have the greatest autonomy (6 tanks + 2 water tanks); another embodiment will have two main tanks (1), two secondary tanks (2) and two water tanks (3); and finally another embodiment will have a main tank (1), a secondary tank (2) and a water tank (3).

In brief, the dual-spray fertilization system has in its constitution:
a) a mechanical support structure consisting of two bars (5) (6) with nozzles (4) along their length and connection means between the nozzles and the tanks (1) (2) (3); it may preferably have only one bar for application of just one product;
b) at least a main tank (1) containing the first product (PD1);
c) at least a secondary tank (2) containing the second product (PD2),
d) at least a washing water tank (3),
e) taps and nozzles (4) for spraying both products (PD1) (PD2) simultaneously;
f) georeferenced information of the land which, as aforementioned, is a prescription map with the desired flow rates for each circuit, or else the information being manually entered by the operator;
g) mobile device with mobile application having working parameters set, such as working width and speed, flow rates (L/ha), number of products (PD1) (PD2) to be sprayed and nozzle (4) capacity;
(h) programmable logic controller (PLC) which receives signals from the flowmeters (C1) (C2) and data from the geographical positioning system (GPS) module;
i) valves (EV1) (EV2) controllable through the geographical positioning system (GPS) module;
j) pressure sensors (P1) (P2) installed in the hydraulic circuit;
k) antenna installed outside the system for communication between the GPS module and the PLC.

Regarding the method, it just is the combination of the operation modes of the hydraulic and electrical schemes, and essentially has the following steps:
a) reading the georeferenced information of the land to be fertilized;
b) identification whether the speed is greater than 1 km/h through the GPS module;
c) filling the pumps (B1) (B2);
d) inlet of water from the tanks (3) into the nozzles (4);
e) changing taps to the main (1) and secondary (2) tanks;
f) inlet of the main product (PD1) and secondary product (PD2) from the tanks (1) (2), respectively through the pumps (B1) (B2);
g) piping the products (PD1) (PD2) to the valves (EV1) (EV2);
h) opening and closing the valves (EV1) (EV2) of the nozzles (4) located in the bars (5) (6), depending on the value initially set to the flowmeters (C1) (C2) and application of the products on the soil.

This method is adaptable for just one product, and in such case the system only has one bar in the mechanical support structure.

## Claims

1. Double-spray fertilization system **characterized by**:
a) a mechanical support structure consisting of two bars (5) (6) with nozzles (4) along their length and connection means between the nozzles and the tanks (1), (2), (3);
b) at least a main tank (1) containing the first product (PD1);
c) at least a secondary tank (2) containing the second product (PD2);
d) at least a washing water tank (3);
e) taps and nozzles (4) for spraying two products (PD1) (PD2) simultaneously, and flowmeters (C1) (C2);
f) georeferenced information of the land and geographic positioning system (GPS) module;
g) mobile device with mobile application having working parameters set;
h) programmable logic controller (PLC) which receives signals from the flowmeters (C1) (C2) and data from the geographical positioning system (GPS) module;
i) valves (EV1) (EV2) controllable through the geographical positioning system (GPS) module;
j) pressure sensors (P1) (P2) installed in the hydraulic circuit;
k) antenna installed outside the system for communication between the GPS module and the PLC.

2. System according to claim 1, **characterized in that** the geographical positioning system (GPS) module is integrated in the system or is part of the agricultural machine itself.

3. System according to claim 1, **characterized in that** the working parameters defined are the working width and speed, flow rates (L/ha), number of products (PD1) (PD2) to be sprayed and nozzle (4) capacity.

4. System according to claim 1, **characterized in that** the georeferenced information of the land is a prescription map with the desired flowrates for each circuit, or else the information being manually entered by the operator.

5. System according to claim 1, **characterized in that** the mechanical structure has only one bar (6) with nozzles (4).

6. System according to claim 1, **characterized in that** it has three main tanks (1), three secondary tanks (2) and two water tanks (3); or two main tanks (1), two secondary tanks (2) and two water tanks (3); or a main tank (1), a secondary tank (2) and a water tank (3).

7. Double-spray method implemented by the system of claims 1 to 6, **characterized by** the following steps:
a) reading the georeferenced information of the land to be fertilized;
b) identification whether the speed is greater than 1 km/h through the GPS module;
c) filling the pumps (B1) (B2);
d) inlet of water from the tanks (3) into the nozzles (4);
e) changing taps to the main (1) and secondary (2) tanks;
f) inlet of the main product (PD1) and secondary product (PD2) from the tanks (1) (2), respectively through the pumps (B1) (B2);
g) piping the products (PD1) (PD2) to valves (EV1) (EV2);
h) opening and closing the valves (EV1) (EV2) of the nozzles (4) located in the bars (5) (6), depending on the value initially set to the flowmeters (C1) (C2) and application of the products on the soil

8. Method according to claim 7, **characterized in that** in step h) only the opening and closing of the valves (EV1) (EV2) of the nozzles (4) located in the bar (5) is performed.
